# DEMANDE DE BREVET EUROPEEN

(11) **EP 0 694 765 A1**
(43) Date de publication de la demande: **31.01.1996**
(21) Numéro de dépôt: 95401782.8
(22) Date de dépôt: 27.07.1995
(51) Int. Cl.: G01D 11/24

(54) **Fabrication de capteurs de grandeur physique et électrique**

(30) Priorité: 29.07.1994 FR 9409442
(71) Demandeur: MAGNETI MARELLI FRANCE, F-92000 Nanterre (FR)
(72) Inventeur: Hennequin, Yves, F-78210 Saint Cyr l'Ecole (FR)
(74) Mandataire: Texier, Christian

(57) **Abrégé**

La présente invention concerne un capteur de grandeur physique ou électrique, notamment de déplacement, de type comprenant : un boîtier (100) qui loge, un transducteur électrique (400), et des moyens de connexion électriques (300) du transducteur à des moyens d'exploitation externe, caractérisé par le fait qu'il comprend en outre un système de calage (600) du transducteur électrique (400) par rapport à une paroi du boîtier (100), par effet de coin, lequel système de calage par effet de coins (600) est sollicité lors de l'assemblage du capteur.

## Description

La présente invention concerne le domaine des capteurs de grandeur physique ou électrique, par exemple les capteurs de déplacement.

La présente invention trouve notamment, mais non exclusivement, application dans la réalisation d'un capteur de rotation intégré dans un roulement de moyeu de roue ou d'essieu de véhicules automobiles.

Un tel capteur de rotation intégré dans un roulement d'essieu de véhicules automobiles délivre un signal représentatif de la vitesse de rotation de l'essieu. Il peut être utilisé pour piloter différents équipements du véhicule, par exemple un indicateur de vitesse, un totalisateur de distance parcourue, un ordinateur de bord ou encore un système anti-patinage ou un système anti-blocage.

On a déjà proposé de nombreux capteurs de déplacement, y compris des capteurs de rotation. On a également déjà proposé d'intégrer des capteurs de rotation dans des roulements de moyeux de roues ou d'essieux de véhicules automobiles. Dans ce cas, le transducteur électrique utilisé dans le capteur est formé le plus souvent d'une sonde à effet Hall ou d'une magnétorésistance.

Les capteurs connus comprennent généralement un boîtier qui loge un transducteur électrique et des moyens de connexion du transducteur à des moyens d'exploitation externes.

Pour permettre une détection fiable et éviter les vibrations, il est généralement nécessaire d'opérer un calage du transducteur électrique par rapport à une paroi interne du boîtier.

On a décrit par exemple dans le document FR-A-2692351 un système de calage du transducteur électrique à base d'un coussinet en élastomère.

La présente invention a maintenant pour but de perfectionner les capteurs de l'art antérieur.

La présente invention a en particulier pour but de proposer un nouveau capteur de grandeur physique ou électrique qui permette une complète automatisation de l'assemblage.

Ces buts sont atteints selon la présente invention grâce à un capteur de grandeur physique ou électrique, notamment de déplacement, du type comprenant:
- un boîtier qui loge,
- un transducteur électrique, et
- des moyens de connexion électrique du transducteur à des moyens d'exploitation externe,
caractérisé par le fait qu'il comprend un système de calage du transducteur électrique par rapport à une paroi du boîtier, par effet de coin, lequel système de calage par effet de coin est sollicité lors de l'assemblage du capteur.

Grâce au calage ainsi obtenu, selon la présente invention on supprime tout jeu entre le transducteur électrique et la paroi en regard du boitier.

Selon une autre caractéristique avantageuse de la présente invention, le capteur comprend un circuit imprimé rigide qui porte le transducteur électrique et qui est sollicité par le système de calage à effet de coin.

Plus précisément et selon une caractéristique avantageuse de l'invention, le circuit imprimé rigide est un circuit imprimé à trois dimensions.

La présente invention concerne également un procédé de fabrication de capteur de grandeur physique ou électrique comprenant les étapes qui consistent à:
- sertir un canon comprenant une collerette évasée sur un câble de transducteur électrique, laquelle collerette est conçue pour obturer le contour d'ouverture d'un boîtier d'habillage,
- placer le transducteur électrique ainsi équipé dans le boîtier de sorte que la collerette obture le contour d'ouverture du boîtier, et
- opérer un surmoulage de matière de synthèse, avantageusement en thermoplastique, voire thermodurcissable, sur la collerette et sur l'ouverture du boîtier, pour sceller ce dernier.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en coupe axiale longitudinale d'un capteur conforme à un mode de réalisation de l'invention,
- la figure 2 représente une vue en plan d'un coin de calage conforme à la présente invention,
- les figures 3, 4 et 5 représentent des vues en perspective d'un capteur conforme à la présente invention à trois étapes successives de son assemblage,
- les figures 6, 7 et 8 représentent des vues similaires en perspective d'un capteur conforme à une autre variante de réalisation de l'invention, à trois étapes de son processus d'assemblage,
- la figure 9 représente une vue schématique en perspective éclatée d'un capteur conforme au mode de réalisation représenté sur les figures 6 à 8 avant réalisation du surmoulage en matière thermoplastique,
- les figures 10a à 10h représentent schématiquement 8 variantes de réalisation de coins conformes à l'invention,
- la figure 11 représente une vue de dessus d'un circuit imprimé rigide à trois dimensions utilisé dans le cadre de l'invention,
- la figure 12 représente une vue en coupe axiale longitudinale du même circuit imprimé rigide à trois dimensions selon le plan de coupe référencé XII-XII sur la figure 11,
- la figure 13 représente une vue en coupe transversale du même circuit imprimé selon le plan de coupe référencé XIII-XIII sur la figure 11,
- la figure 14 représente une première vue en bout de ce circuit imprimé rigide à trois dimensions selon la vue référencée XIV sur la figure 12,
- la figure 15 représente une seconde vue en bout du même circuit imprimé rigide à trois dimensions selon la vue référencée XV sur la figure 11,
- la figure 16 représente une vue en plan d'un canon destiné à être serti sur le câble du transducteur électrique, équipé d'une bride,
- la figure 17 représente une vue en coupe transversale de la même pièce selon la vue référencée XVII-XVII sur la figure 16, et
- la figure 18 représente une seconde vue en coupe de la même pièce selon la vue référencée XVIII-XVIII sur la figure 17.

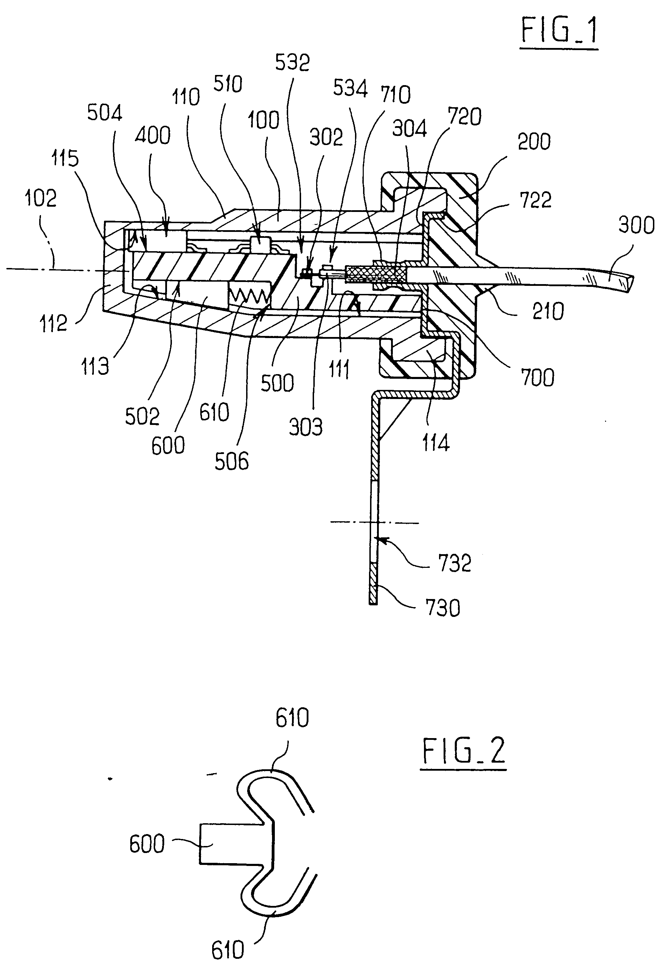

On va tout d'abord décrire le mode de réalisation du capteur représenté sur la figure 1 annexée.

On aperçoit sur cette figure 1 un capteur de vitesse conçu pour être placé dans un roulement de moyeu de roue ou d'essieu de véhicules automobiles et qui comprend : un boîtier 100, un chapeau ou couvercle 200 surmoulé sur un cable de sortie 300, un transducteur électrique 400, un circuit imprimé rigide à trois dimensions 500 et un coin 600.

De préférence, le circuit imprimé rigide 500 à trois dimensions porte des composants électriques 510. Ces derniers forment un circuit de traitement et de mise en forme du signal électrique issu du transducteur électrique 400.

Ce dernier est formé avantageusement d'une sonde à effet Hall ou d'une magnétorésistance.

De façon connue en soi, le circuit imprimé rigide à trois dimensions 500 est formé d'une pièce monobloc en matière thermoplastique revêtue localement de pistes électriquement conductrices.

Ces pistes électriquement conductrices assurent des liaisons électriques entre les sorties du transducteur 400 et les composants 510, ainsi qu'avec les conducteurs du câble de liaison 300.

Ce câble de liaison 300 peut être multiconducteur. Il peut être également formé d'un câble coaxial. Sur la figure 1, on a représenté un câble 300 comprenant une âme interne électriquement conductrice 302, un second conducteur 303 concentrique à cette âme et séparé de celle-ci par une couche électriquement isolante et un blindage externe 304 électriquement conducteur formé de préférence d'une tresse, lui même séparé du second conducteur 303 par une couche électriquement isolante et recouvert d'une couche électriquement isolante.

L'âme 302 et le second conducteur 303 du câble 300 sont reliés, de préférence par soudure, à des pistes électriquement conductrices respectives du circuit imprimé 500.

Comme on l'expliquera par la suite, le blindage 304 est éventuellement quant à lui relié à une pièce 700 comprenant un canon serti sur le câble 300.

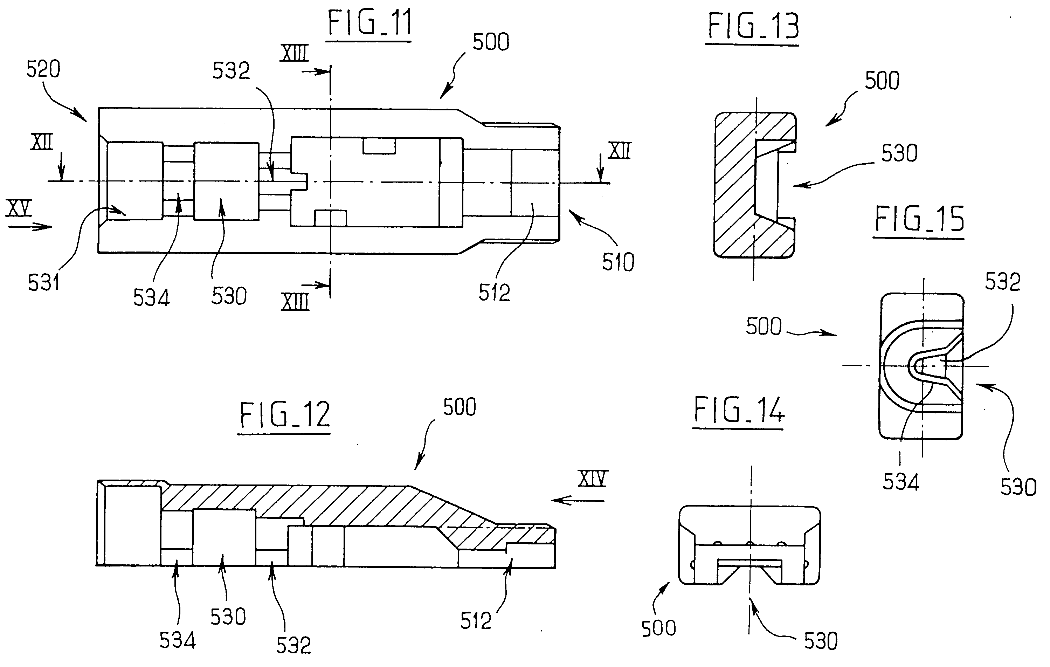

Le circuit imprimé rigide 300 peut faire l'objet de nombreuses variantes de réalisation en fonction du capteur considéré. Pour cette raison, sa géométrie ne sera pas décrite dans le détail par la suite. Toutefois, on évoquera ultérieurement, diverses caractéristiques de base de ce circuit imprimé rigide 500 en regard des figures 11 à 15.

Le boîtier 100 peut faire l'objet de nombreuses variantes de réalisation, quant à sa géométrie ou sa nature. Il peut être réalisé par exemple en métal ou à base de matériau plastique de synthèse, par exemple thermoplastique ou thermodurcissable, sous réserve de ne pas perturber la grandeur physique ou électrique à mesurer.

Ce boîtier 100 est généralement centré sur un axe 102. Cependant il n'est pas formé nécessairement d'un corps de révolution. Il comprend de préférence une jupe annulaire 110 centrée autour de l'axe 102 et obturée à une extrémité par une paroi de fond 112 transversale à l'axe 102. A son extrémité opposée qui correspond au contour d'ouverture, le boîtier 100 est pourvu de préférence, sur sa surface externe, d'une collerette ou nervure annulaire 114.

De préférence, la jupe annulaire 110 est pourvue, sur sa surface interne 111, au voisinage de la paroi de fond 112 et sur un secteur limité de sa périphérie, d'une rampe 113 inclinée par rapport à l'axe 102. A titre d'exemple non limitatif, la rampe 113 peut être inclinée de l'ordre de 5 à 20°, typiquement 10° par rapport à l'axe 102.

Le coin 600 précité est intercalé entre cette rampe 113 et une face 502 du circuit imprimé rigide 500. De préférence, cette face 502 du circuit imprimé 500 est parallèle à l'axe 102. Le coin 600 est quant à lui effilé en direction du fond 112 du boîtier.

Ainsi, lorsque le coin 600 est sollicité en déplacement vers le fond 112, il sollicite lui-même le circuit imprimé 500 en direction de la zone 115 de la surface interne 111 du boîtier, diamétralement opposée à la rampe 113. Le transducteur électrique 400 étant quant à lui placé sur la surface 504 du circuit imprimé rigide 500 opposée à la face 502 adjacente au coin 600, on comprend que la sollicitation du coin 600 sur le circuit imprimé 500 tend à plaquer le transducteur électrique 400 contre la zone précitée 115 de la surface interne 111 du boîtier.

Ainsi, le transducteur 400 est positionné avec précision par rapport au boîtier 100 et par conséquent par rapport à l'environnement dans lequel est placé le boîtier 100.

Bien entendu, en variante, on peut prévoir de disposer la rampe 113 inclinée par rapport à l'axe 102 sur le circuit imprimé rigide 500 et non point sur la paroi interne du boîtier 100.

Pour solliciter le coin 600 vers la paroi de fond 112 du boîtier, il est prévu de préférence un élément ressort 610 s'étendant parallèlement à l'axe 102 et intercalé entre le coin 600 et un décrochement 506 formé sur le circuit imprimé rigide 500.

Le coin 600 et le ressort 610 peuvent être formés de pièces indépendantes du circuit imprimé 500.

Toutefois, comme on l'a schématisé partiellement sur la figure 2, le coin 600 et l'élément 610, peuvent être venus de moulage avec le circuit imprimé rigide 500.

Ainsi, on a illustré sur la figure 2, en vue latérale, un coin 600 et deux bretelles de liaison élastiques incurvées 610 susceptibles de venir de moulage avec le circuit imprimé rigide 500, pour relier ce dernier au coin 600.

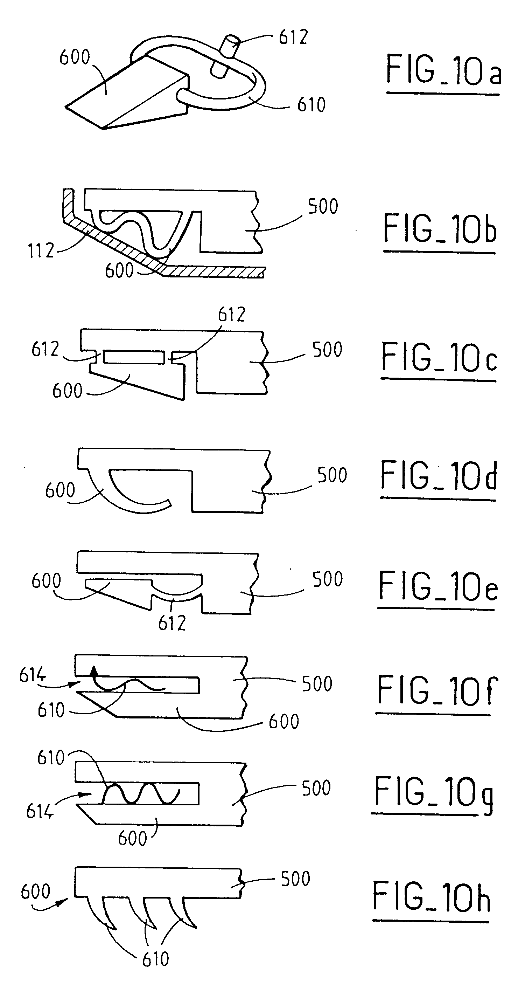

D'autres modes de réalisation du coin 600 seront décrits par la suite en regard des figures 10a à 10h.

L'utilisation d'un circuit imprimé rigide à trois dimensions 500 comme décrit précédemment, offre l'avantage de permettre un positionnement facile et une liaison facile par soudure, du câble 300.

Plus précisément, comme on l'a évoqué précédemment, le capteur représenté sur la figure 1 comprend en outre une pièce 700 pourvue d'un canon 710 serti sur le câble 300, de préférence sur le blindage externe 304 de ce dernier.

La pièce 700 est réalisée de préférence en matériau électriquement conducteur, avantageusement du métal.

Par ailleurs, ce canon 710 est solidaire au niveau de sa périphérie extérieure, et au niveau de l'une de ses extrémités axiales, d'une collerette plane 720 centrée sur l'axe du canon et transversale à cet axe.

La collerette 720 possède un diamètre extérieur complémentaire du contour d'ouverture du boîtier 100 de sorte que la collerette obture après assemblage ce contour d'ouverture.

De préférence, comme on le voit sur la figure 1, la collerette 720 se prolonge elle-même, au niveau de sa périphérie extérieure, par une jupe cylindrique 722 centrée sur l'axe du canon. Cette jupe 722 possède également un diamètre extérieur complémentaire du contour d'ouverture du boîtier 100. La jupe 722 est placée sur le côté de la collerette 720 opposée au canon 710.

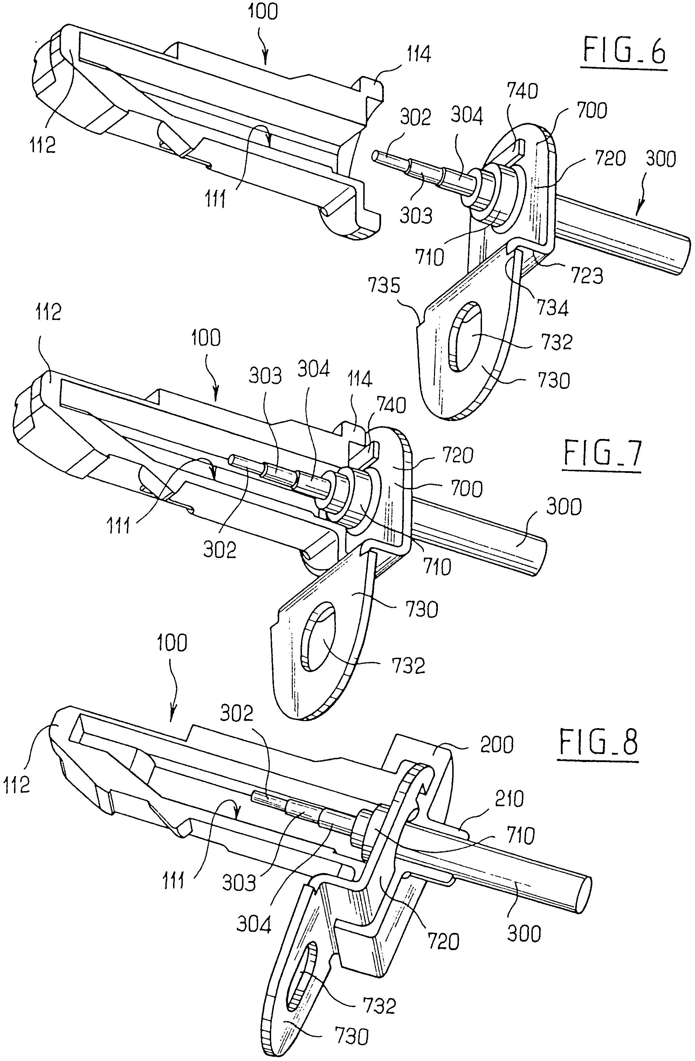

Enfin, comme on le voit sur la figure 1 (ainsi que sur les figures 6 à 8) la jupe 722 peut se prolonger elle-même, radialement, sur une zone limitée de sa circonférence, par une bride 730 généralement radiale par rapport à l'axe du canon 710. La bride 730 possède de préférence un oeillet 732 de fixation.

Pour assembler le capteur ainsi constitué, on procède de préférence comme suit.

Le canon 710 de la pièce 700 est serti sur le blindage 304 du câble 300.

Ensuite, l'âme 302 et le second conducteur 303 du câble 300 sont fixés par soudure sur les pistes électriques respectivement associées du circuit imprimé rigide 500. L'ensemble ainsi formé circuit imprimé 500 équipé des composants 510, 400, ainsi que le coin 600 et le ressort 610, la pièce 700 et le câble 300 sont positionnés dans le boîtier 100. La collerette 720 et la jupe 722 ferment alors le contour d'ouverture du boîtier 100.

On peut ensuite procéder au surmoulage du chapeau 200.

Au cours de cette opération de surmoulage la collerette 720 interdit toute pénétration de la matière thermoplastique de surmoulage à l'intérieur de la cavité du boîtier 100 et protège par conséquent le circuit imprimé 500, les pistes électriques de celui-ci, les composants 510 et le transducteur 504.

Comme on l'a exposé précédemment, lors de l'introduction du circuit imprimé 500 dans le boîtier 100, le ressort 610 pousse le coin 600 vers la paroi de fond 112 ce qui assure un calage du transducteur électrique 400 contre la zone 115 de la paroi interne du boîtier 100. Le transducteur 400 est ainsi positionné avec précision.

On notera que de préférence le surmoulage du chapeau 200 recouvre la nervure 114 du boîtier 100 pour sceller celui-ci de façon étanche et assurer une parfaite immobilisation de la pièce 700 et du câble 300 par rapport au boîtier 100.

Plus précisément encore, au cours de cette étape d'injection, on prévoit un point d'injection dirigé non point directement vers la gaine extérieure du câble 300, mais dirigé vers la collerette 720 de la pièce 700.

Ainsi, on évite tout contact direct entre la gaine extérieure du câble 300 et la veine chaude de matière thermoplastique issue de l'outil d'injection.

Outre, cet effet de protection, la pièce 700 et en particulier la collerette 720 facilite le positionnement de l'ensemble dans l'outil de surmoulage et, grâce au sertissage sur le câble 300 interdit tout arrachement fortuit de celui-ci.

La pièce 700 évite ainsi toute nécessité de scellement, en particulier à l'aide d'une résine époxy, comme cela était généralement utilisé dans les capteurs classiques.

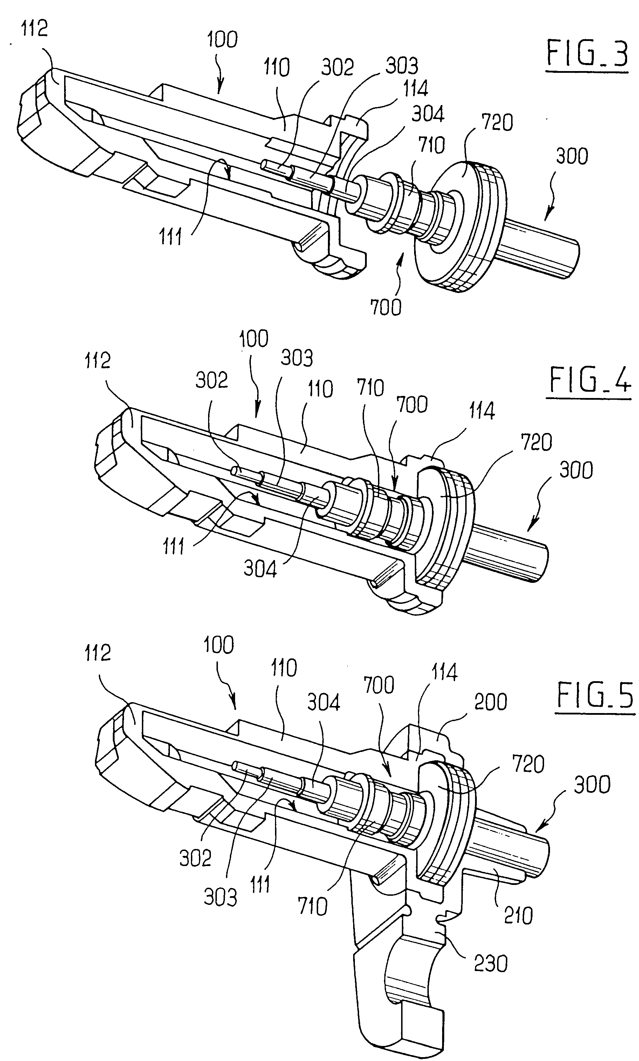

Sur les figures 3 à 5 ainsi que sur les figures 6 à 8, on a omis pour simplifier l'illustration le circuit imprimé rigide 500, le transducteur électrique 400 et le coin 600.

On retrouve sur les figures 3 et 4, le boîtier 100, le câble 300 et une pièce 700 dépourvue de la bride 730.

En revanche, selon le mode de réalisation représenté sur les figures 6 à 8, ladite pièce 700 comprend une bride 730 pourvue d'un oeillet 732 conforme généralement au mode de réalisation de la figure 1.

Comme on le voit sur les figures annexées, de préférence, le chapeau 200 comprend, venu de moulage, un cône ou cylindre 210 qui s'étend sur l'extérieur autour du câble 300 pour assurer l'étanchéité sur celui-ci.

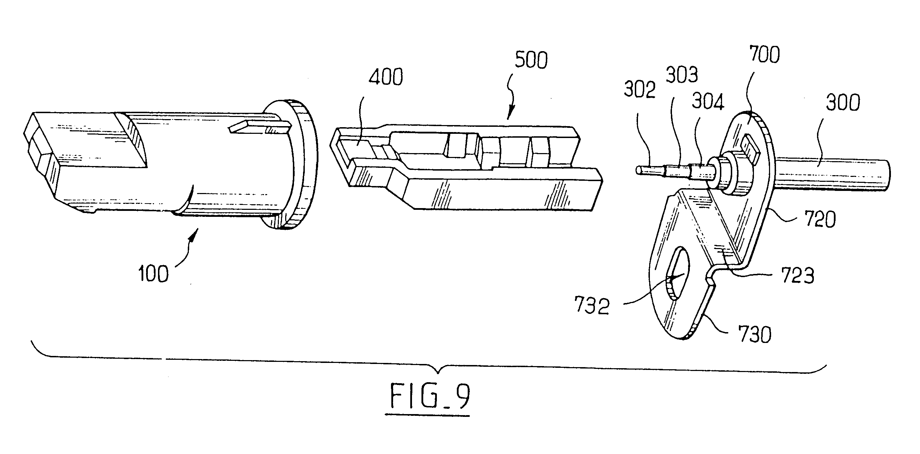

Le circuit imprimé rigide à trois dimensions 500 représenté sur la figure 9 est conforme aux dessins des figures 11 à 15.

Pour l'essentiel, ce circuit imprimé 500 est formé d'un corps allongé réalisé par moulage de matière plastique, par exemple thermoplastique et qui présente un plan général de symétrie coïncidant avec le plan de coupe de la figure 12.

Ce corps de circuit imprimé 500 peut faire l'objet de nombreuses variantes. De préférence, il comprend, à une extrémité avant effilée 510, un berceau 512 pour la réception du transducteur électrique 400.

Entre son extrémité arrière 520 et le berceau 510, la pièce 500 possède un canal 530 destiné à recevoir l'extrémité du câble 300 et qui comporte de préférence un berceau 532 destiné à recevoir l'âme électriquement conductrice 302 du câble 300, lequel berceau 532 est recouvert d'une piste électriquement conductrice, et un berceau 534 destiné à recevoir le conducteur 303 et qui est également recouvert d'une piste électriquement conductrice respectivement associée à ce conducteur 303.

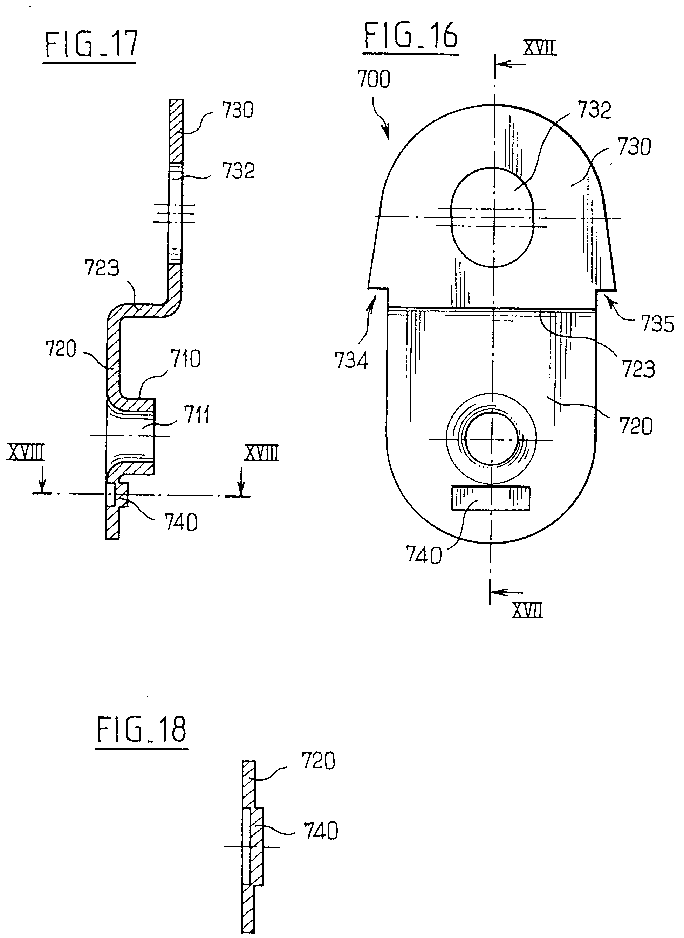

On retrouve sur les figures 16 à 18, une pièce 700 conforme à l'illustration des figures 6 à 9.

Plus précisément on retrouve sur les figures 16 à 18, un canon 710, conçu pour être serti sur la gaine externe du câble 300 et éventuellement sur le blindage 304 du câble 300. Ce canon 710 est prolongé sur une extrémité axiale et sur sa périphérie extérieure par la collerette plane 720. Cette collerette 720 est munie selon les figures 16 à 18 d'une toile 723 parallèle à l'axe 711 du canon, sur une partie de sa périphérie, et cette toile 723 se prolonge elle-même par une bride 730 munie d'un oeillet 732. La bride 730 est perpendiculaire à l'axe 711.

De préférence la bride 730 possède des décrochements 734, 735, sur ses flancs pour améliorer l'ancrage du surmoulage constituant le chapeau 200.

Par ailleurs, de préférence, la collerette 720 est pourvue d'un détrompeur 740, formé par exemple par poinçonnage local de ladite collerette 720. Le détrompeur 740 peut être formé par exemple diamétralement opposé à la bride 730 par rapport à l'axe 711.

Le détrompeur 740 doit être complémentaire d'une chambre 531 prévue dans le canal 530 du circuit imprimé 500 au niveau de l'extrémité arrière 520 de celui-ci, pour définir une position univoque entre la pièce 700 et le circuit 500, et par conséquent par rapport au transducteur électrique 400.

On comprend à l'examen des figures 6 à 9, que la pièce 700 assure non seulement la protection du circuit imprimé 500 et des composants portés par celui-ci en évitant toute pénétration de matière thermoplastique à l'intérieur du boîtier 100, mais peut également assurer une fonction mécanique de fixation pour le capteur grâce à la bride 730, et/ou une fonction électrique, grâce à son raccordement sur le blindage 304 du câble 300.

Bien entendu la bride 730 peut être plus ou moins enrobée par le surmoulage du chapeau 200.

Selon la variante de réalisation représentée sur les figures 3 à 5, la bride de fixation portant la référence 230 est venue de moulage avec le chapeau 200.

Selon une variante, il peut également être prévu une liaison électrique entre une masse prévue sur le circuit imprimé rigide à trois dimensions 500 et le blindage 304 du câble 300, ainsi que par conséquent avec la pièce 700.

Bien entendu la présente invention n'est pas limitée aux modes de réalisation particuliers qui viennent d'être décrits mais s'étend à toute variante conforme à son esprit.

En particulier le coin 600 peut faire l'objet de nombreux modes de réalisation.

On a représenté sur la figure 10a un coin 600 solidaire d'un ressort 610 en forme d'un anneau lequel est pourvu d'un doigt 612 par lequel le coin 600, qui est formé d'une pièce indépendante du circuit imprimé 500, peut être engagé et maintenu sur ce dernier.

On a représenté sur la figure 10b une variante selon laquelle le coin 600 est formé d'ondulations venues de moulage sur le circuit imprimé 500.

On a représenté sur la figure 10c une variante selon laquelle le coin 600 est venu de moulage sur le circuit imprimé 500 et relié à celui-ci par l'intermédiaire de pattes élastiques 612.

On a représenté sur la figure 10d une variante selon laquelle le coin 600 est formé d'une languette élastique venue de moulage avec le circuit imprimé 500.

On a représenté sur la figure 10e une variante selon laquelle le coin 600 est venu de moulage sur le circuit imprimé 500 et relié à celui-ci par l'intermédiaire d'un pont élastique incurvé 612.

On a représenté sur la figure 10f une variante selon laquelle le coin 600 est venu de moulage sur le circuit imprimé 500 et délimité dans celui-ci par une fente 614 qui reçoit une lame ressort 610 engagée dans le circuit imprimé 500 et maintenue sur celui-ci.

On a représenté sur la figure 10g une variante selon laquelle le coin 600 est venu de moulage sur le circuit imprimé 500 et délimité dans celui-ci par une fente 614 qui reçoit une lame ressort 610.

On a représenté sur la figure 10h une variante selon laquelle le coin 600 est formé de plusieurs lamelles élastiques 610 en forme de peigne.

Pour simplifier l'illustration, on n'a pas représenté le coin 600 sur les figures 9 et 11 à 15.

## Revendications

1. Capteur de grandeur physique ou électrique, notamment de déplacement, de type comprenant:
- un boîtier (100) qui loge,
- un transducteur électrique (400), et
- des moyens de connexion électriques (300) du transducteur à des moyens d'exploitation externe,
caractérisé par le fait qu'il comprend en outre un système de calage (600) du transducteur électrique (400) par rapport à une paroi du boîtier (100), par effet de coin, lequel système de calage par effet de coin (600) est sollicité lors de l'assemblage du capteur.

2. Capteur selon la revendication 1, caractérisé par le fait qu'il comprend un circuit imprimé rigide (500) qui porte le transducteur électrique (400) et qui est sollicité par le système de calage à effet de coin (600).

3. Capteur selon l'une des revendications 1 ou 2, caractérisé par le fait qu'il comprend un circuit imprimé rigide à trois dimensions qui porte le transducteur électrique (400) et qui est sollicité par le système de calage à effet de coin (600).

4. Capteur selon l'une des revendications 1 à 3, caractérisé par le fait que le transducteur électrique (400) est formé d'une sonde à effet Hall ou d'une magnétorésistance.

5. Capteur selon l'une des revendications 1 à 4, caractérisé par le fait que le système de calage par effet de coin (600) est sollicité par un ressort (610).

6. Capteur selon la revendication 5, caractérisé par le fait que le système de calage par effet de coin (600) et le ressort associé (610) sont venus de moulage avec un circuit imprimé rigide à trois dimensions (500).

7. Capteur selon l'une des revendications 1 à 6, caractérisé par le fait que l'un du boîtier (100) ou d'un circuit imprimé rigide à trois dimensions (500) possède une rampe (113) apte à solliciter le système de calage à effet de coin (600).

8. Capteur selon l'une des revendications 1 à 7, caractérisé par le fait qu'il comprend une collerette (720) apte à obturer le contour d'ouverture du boîtier (100) avant surmoulage d'un chapeau (200).

9. Capteur selon la revendication 8, caractérisé par le fait que la collerette (720) est solidaire d'un canon (710) serti sur un câble de raccordement (300).

10. Capteur selon la revendication 8, caractérisé par le fait que le système de calage par effet de coin (600) comprend plusieurs lamelles élastiques (610) en forme de peigne venues de moulage sur un circuit imprimé à trois dimensions (500).

11. Capteur selon la revendication 9, caractérisé par le fait que la pièce (700) formant la collerette (720) assure également une fonction électrique.

12. Capteur selon la revendication 9, caractérisé par le fait que la pièce (700) formant la collerette (720) assure en outre une fonction de fixation mécanique.

13. Capteur selon l'une des revendications 8, 9, 11 ou 12, caractérisé par le fait que la pièce formant la collerette (720) est reliée à un blindage formé sur un circuit imprimé rigide à trois dimensions (500).

14. Capteur selon l'une des revendications 8, 9 ou 11 à 13, caractérisé par le fait que la pièce formant la collerette (720) possède un détrompeur de positionnement (740).

15. Procédé de fabrication d'un capteur de grandeur physique ou électrique conforme à l'une des revendications 1 à 14, comprenant un boîtier (100) qui loge un transducteur électrique (400), des moyens de connexion électrique (300) du transducteur à des moyens d'exploitation externe, et un système de calage (600) du transducteur électrique (400) par rapport à une paroi du boîtier (100), par effet de coin, lequel système de calage par effet de coin (600) est sollicité lors de l'assemblage du capteur,
caractérisé par le fait qu'il comprend les étapes consistant à:
- sertir un canon (710) pourvu d'une collerette (720) sur un câble (300) du transducteur électrique, laquelle collerette est conçue pour obturer le contour d'ouverture du boîtier (100),
- placer le transducteur électrique ainsi équipé dans le boîtier (100) de sorte que la collerette (720) obture le contour d'ouverture du boîtier (100), et
- opérer un surmoulage de matière thermoplastique sur la collerette (720) et l'ouverture du boîtier (100) pour sceller ce dernier.

16. Procédé selon la revendication 15, caractérisé par le fait qu'il comprend en outre l'étape consistant à relier la pièce (700) formant le canon (710) et la collerette (720) à un blindage prévu sur un circuit imprimé rigide à trois dimensions (500).

17. Procédé selon l'une des revendications 15 ou 16, caractérisé par le fait que le transducteur électrique est une sonde à effet Hall ou une magnétorésistance.

18. Pièce pour la mise en oeuvre du procédé conforme à l'une des revendications 15 à 17, caractérisée par le fait qu'elle comprend un canon (710) apte à être serti sur un câble (300) et une collerette (720) apte à obturer le contour d'ouverture d'un boîtier d'habillage (100).

19. Pièce selon la revendication 18, caractérisée par le fait qu'elle comprend une bride (730) assurant une fonction de fixation mécanique.

20. Pièce selon l'une des revendications 18 ou 19, caractérisée par le fait qu'elle assure en outre une fonction de raccordement électrique.

21. Pièce selon l'une des revendications 18 à 20, caractérisée par le fait qu'elle comprend un détrompeur (740).

22. Pièce selon l'une des revendications 18 à 21, caractérisée par le fait qu'elle comprend un oeillet de fixation (732).
